# EUROPÄISCHE PATENTSCHRIFT

(11) **EP 0 568 655 B1**
(45) Veröffentlichungstag und Bekanntmachung des Hinweises auf die Patenterteilung: **14.08.1996**
(21) Anmeldenummer: 92918926.4
(22) Anmeldetag: 10.09.1992
(51) Int. Cl.: B60R 16/04, F02N 11/08, H02J 7/00

(54) **VORRICHTUNG ZUR SPANNUNGSVERSORGUNG IN EINEM KRAFTFAHRZEUG**
DEVICE FOR SUPPLYING ELECTRIC POWER IN A MOTOR VEHICLE
DISPOSITIF D'ALIMENTATION EN COURANT D'UN VEHICULE AUTOMOBILE

(30) Priorität: 27.11.1991 DE 4138943
(43) Veröffentlichungstag der Anmeldung: 10.11.1993
(73) Patentinhaber: ROBERT BOSCH GMBH, 70442 Stuttgart (DE)
(72) Erfinder: MEYER, Friedhelm, D-7132 Illingen (DE); FREY, Wunibald, D-7141 Schwieberdingen (DE); DOEGE, Mathias, D-7121 Erligheim (DE)
(86) Internationale Anmeldenummer: DE9200769
(87) Internationale Veröffentlichungsnummer: WO9311003

(56) Entgegenhaltungen:
- EP-A- 0 116 213
- WO-A-79/00617
- DE-A- 3 312 171
- DE-A- 3 622 157
- GB-A- 979 969
- GB-A- 1 585 915
- US-A- 3 806 790
- US-A- 4 489 242
- US-A- 4 723 105

## Beschreibung

### Stand der Technik

Die Erfindung geht aus von einer Vorrichtung zur Spannungsversorgung in einem Kraftfahrzeug nach der Gattung des Hauptanspruchs.

Die Spannungsversorgung in einem Kraftfahrzeug wurde bisher in den meisten Fällen mit Hilfe einer einzigen, von einem Generator aufgela- denen Batterie erreicht. In modernen Kraftfahrzeugen mit einer Viel- zahl von elektrischen Verbrauchern reicht eine Batterie zur Span- nungsversorgung teilweise nicht mehr aus, so daß zwei getrennte Batterien verwendet werden, die entweder miteinander in Serie oder parallel geschaltet werden.

Da die meisten der elektrischen Verbraucher im Kraftfahrzeug eine auf einen konstanten Wert geregelte Versorgungsspannung benötigen, treten insbesondere während des Startvorgangs Versorgungsprobleme auf, da der Starter einen geringen Innenwiderstand aufweist und daher das Bordnetz durch einen hohen Strom von mehreren 100 Ampere belastet, so daß während des Startvorgangs die Bordnetzspannung auf einen Wert absinkt, bei dem beispielsweise die Zündung oder die Einspritzung nicht mehr einwandfrei funktioniert.

Um dem vorzubeugen, wird bei einem aus der DE-OS 38 12 577 bekannten Bordnetz für ein Kraftfahrzeug der Starter an eine Batterie angeschlossen, während die konstante Spannung benötigenden empfindlichen Verbraucher an eine andere Batterie angeschlossen sind. Beide Batterien können wahlweise von einem einzigen oder von zwei getrennten Generatoren mit Spannung versorgt werden.

Das bekannte Bordnetz für ein Kraftfahrzeug hat jedoch den Nachteil, daß die Verbindung zwischen den beiden Batterien während des Startens nicht unterbrochen werden kann, so daß ein Absinken der Spannung an der mit dem Starter verbundenen Batterie auch Auswirkungen auf das übrige Bordnetz haben kann.

Ein weiterer Nachteil des bekannten Bordnetzes ist darin zu sehen, daß die Nennspannung der mit dem Starter verbundenen Batterie höher ist als die Nennspannung der anderen Batterie, so daß die Wiederaufladung einer entladenen Starterbatterie mit Hilfe der anderen Batterie nicht ohne weiteres möglich ist.

Eine weitere Vorrichtung zur Spannungsversorgung in einem Kraftfahrzeug ist aus der WO-A-79/00617 bekannt. Bei diesem bekannten Spannungsversorgungssystem sind zwei Batterien mit gleicher Nennspannung zueinander parallel geschaltet. Eine dieser beiden Batterien läßt sich unter vorgebbaren Bedingungen durch Öffnen eines Schalters abtrennen. Die Abtrennung erfolgt dabei immer dann, wenn der vom Generator gelieferte Ladestrom gering ist oder wenn die Gefahr besteht, daß die abtrennbare Batterie von der parallel geschalteten entladen werden könnte. Mit dieser Anordnung können die beiden Batterien individuell geladen werden, es ist jedoch zwingend erforderlich, daß sie dieselbe Nennspannung aufweisen. Eine Optimierung der Spannungshöhe an die Bedürfnisse der Verbraucher, die von den Batterien versorgt werden sollen, ist daher nicht möglich.

Die der Erfindung zugrundeliegende Aufgabe besteht darin, eine Vorrichtung zur Spannungsversorgung in einem Kraftfahrzeug bereitzustellen, die einerseits eine optimale Versorgung der Verbraucher auch bezüglich der erforderlichen Spannungshöhe gewährleistet und andererseits sicherstellt, daß die für den Starter vorgesehene Batterie einen Ladezustand aufweist, der einen Neustart des Motors ermöglicht. Gleichzeitig soll verhindert werden, daß der vom Starter verursachte Spannungseinbruch Auswirkungen auf die übrige Bordnetzversorgung hat. Gelöst wird diese Aufgabe durch eine Vorrichtung zur Spannungsversorgung in einem Kraftfahrzeug mit den Merkmalen des Hauptanspruchs.

### Vorteile der Erfindung

Die erfindungsgemäße Vorrichtung zur Spannungsversorgung in einem Kraftfahrzeug mit den kennzeichenden Merkmalen des Hauptanspruchs hat gegenüber dem Stand der Technik den Vorteil, daß zwei Spannungspeicher mit unterschiedlichen Nennspannungen eingesetzt werden, beispielsweise die normale Batterie für das Bordnetz und ein sogenannter Startspeicher zur Versorgung des Starters. Dabei wird der Starter sowie der zugehörige Spannungsspeicher während des Startvorgangs über ein Lade-/Trennmodul vom übrigen Bordnetz sowie vom ersten Spannungsspeicher abgetrennt, so daß der vom Starter verursachte Spannungseinbruch keine Auswirkungen auf die übrige Bordnetzspannung verursacht.

Wird die Nennspannung des dem Starter zugeordneten zweiten Spannungsspeichers niedriger gewählt als die Nennspannung des ersten Spannungsspeichers, kann der nach mehreren Startversuchen weitgehend entladene zweite Spannungsspeicher über das Lade-/Trennmodul aus dem ersten Spannungsspeicher leicht nachgeladen werden.

Da dem Lade-/Trennmodul eine Vielzahl von Bordnetzparametern bzw. Meßgrößen zugeführt werden, kann dieses eine Um- bzw. Abschaltung in Abhängigkeit von vorgegebenen Paramtern selbständig durchführen.

Wird dem Lade-/Trennmodul zusätzlich ein Hochsetzsteller zugeordnet, kann die Startbatterie eine höhere oder gleiche Nennspannung aufweisen, als die Bordnetzbatterie. Zusätzlich besteht dann die Möglichkeit bei nahezu "leerer" Batterie zur Bordnetzversorgung den Spannungsspeicher für weitere Startversuche zu laden.

### Zeichnung

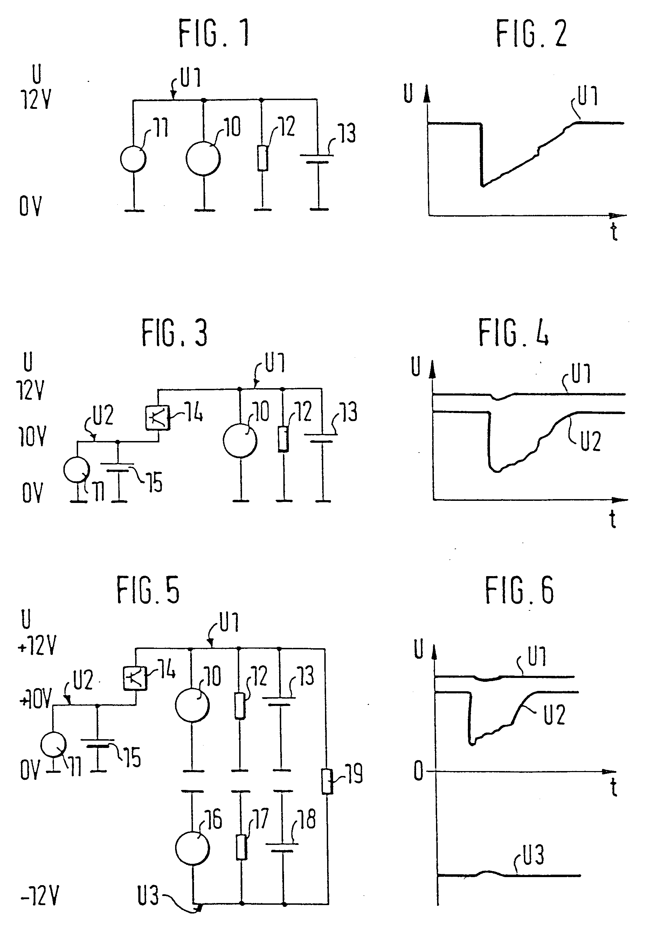

Die Erfindung wird in den Figuren dargestellt und in der nachfolgenden Beschreibung näher erläutert. Dabei zeigt Figur 1 ein herkömmliches Bordnetz und Figur 2 den zugehörigen Spannungsverlauf während des Startvorgangs.

In Figur 3 und 5 sind erfindungsgmäße Anordnungen zur Spannungsversorgung in einem Kraftfahrzeug dargestellt, in den Figuren 4 und 6 die zugehörigen Spannungsverläufe während eines Startvorgangs.

Die Figuren 7 und 8 zeigen Blockschaltbilder der in den Figuren 3 und 5 nur schematisch dargestellten Lade-/Trennmodule und Figur 9 ein Schaltungsbeispiel für ein Lade-/Trennmodul.

### Beschreibung

In Figur 1 ist ein herkömmliches Bordnetz schematisch dargestellt, wobei ein Generator 10 sowohl den Starter 11 als auch die als Widerstand dargestellten Verbraucher 12 und die Batterie 13 mit Spannung versorgt.

Die Ausgangsspannung des Generators 10 wird dabei auf U1 geregelt, üblicherweise stellt sich dabei die auf der linken Seite der Figur 1 angegebene Spannungsverteilung, 0 Volt an Masse und 12 Volt am positiven Ausgang des Generators ein.

Bei Betätigung des Starters 11 sinkt jedoch die mit U1 bezeichnete Ausgangsspannung des Generators plötzlich stark ab, da der Starter einen sehr geringen Innenwiderstand aufweist. Die sich ergebende Spannungsverteilung ist in Figur 2 über der Zeit t aufgetragen.

Damit der beim Startvorgang auftretende Spannungseinbruch keine Auswirkungen auf die mit 12 bezeichneten elektrischen Verbraucher des Kraftfahrzeugs verursacht, ist bei dem in Figur 3 angegebenen Ausführungsbeispiel der Erfindung der Starter 11 über ein Lade-/Trennmodul 14 an den Generator angeschlossen, wobei parallel zum Starter ein zusätzlicher Spannungsspeicher, im Ausführungsbeispiel eine Batterie 15 geschaltet ist. Dieser Spannungsspeicher wird auch als Startspeicher bezeichnet.

Die Spannungsverteilung, die sich bei dieser Vorrichtung zur Spannungsversorgung einstellt, ist in Figur 4 angegeben, dabei ist die Ausgangsspannung des Generators wieder mit U1 bezeichnet, die am Starter 11 bzw. der Batterie 15 anstehende Spannung ist mit U2 bezeichnet. Während des Startvorgangs sinkt U2 stark ab, dies hat jedoch keine Auswirkungen auf die Spannung U1, da das Lade-/Trennmodul 14 die Verbindung zwischen dem Starter 11 und der Batterie 15 und dem übrigen Bordnetz unterbricht.

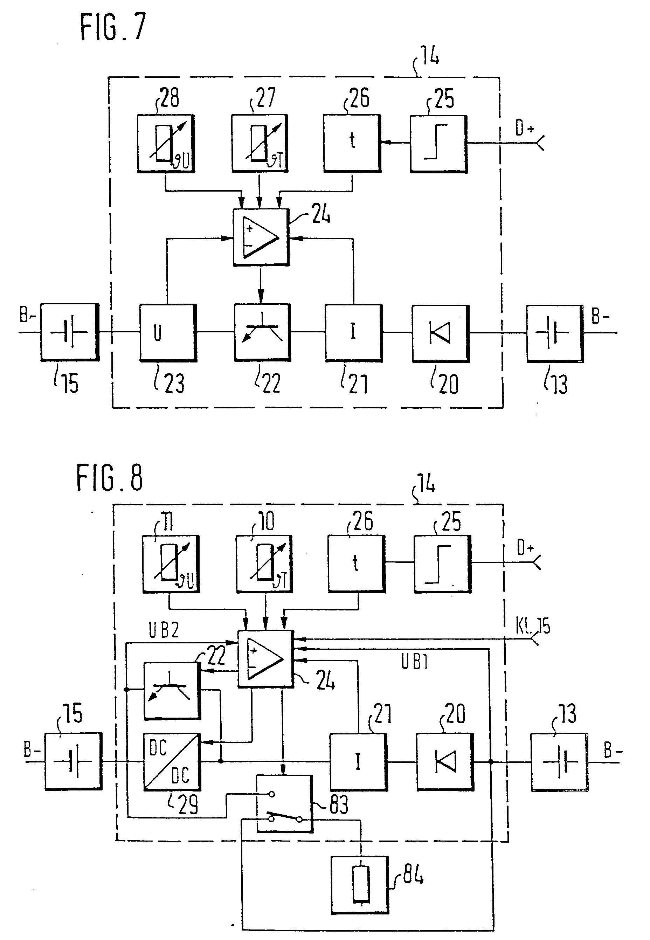

Der genaue Aufbau sowie die Funktion des Lade-/Trennmoduls 14 ist in Figuren 7 bis 9 dargestellt sowie der zugehörigen Beschreibung zu entnehmen.

Beim in Figur 3 dargestellten Ausführungsbeispiel wird eine Spannungsverteilung im Ruhezustand angestrebt, die im normalen Bordnetz 12 Volt beträgt U1, während sie am Starter 10 Volt U2 beträgt, wobei auch die Nennspannung der Batterie 15 10 Volt beträgt. Mit einer solchen Spannungsverteilung wird gewährleistet, daß eine entladene Batterie 15 über das Lade-/Trennmodul 14 vom Generator bzw. der Batterie 13 schnell und zuverlässig geladen wird.

In Figur 5 ist ein Ausführungsbeispiel abgebildet, bei dem ein weiterer Generator 16 und eine weitere Batterie 18 vorhanden sind, die Verbraucher 12, 17 und 19 sind dabei in geeigneter Weise an die Batterien 13, 18 angeschlossen.

Die angestrebte Spannungsverteilung im unbelasteten Zustand ergibt + 12 Volt für U1, + 10 Volt für U2, 0 Volt an Masse und - 12 Volt für U3. Dabei sind diese Spannungen ausgewählte Spannungen, es sind auch andere Spannungen denkbar, insbesondere eine Spannung von - 24 Volt für U3. Wesentlich ist jedoch bei diesem Ausführungsbeispiel, daß die am Starter (11) liegende Spannung U2 kleiner ist als die Spannung U1, da damit wiederum eine schnelle und zuverlässige Aufladung der Batterie 15 aus der Batterie 13 möglich ist.

Der sich im Startfall einstellende Spannungsverlauf des Ausführungsbeispiels nach Figur 5 ist in Figur 6 aufgetragen, dabei ist zu erkennen, daß lediglich die Spannung U2 während des Startvorgangs stark absinkt. Die Spannung U1 sinkt nur unwesentlich ab und U3 erhöht sich geringfügig. Erreicht wird dieser Spannungsverlauf mit Hilfe des Lade-/Trennmoduls 14, das den Starter 11 und die Batterie 15 während des Startvorgangs vom restlichen Bordnetz abtrennt.

In Figur 7 ist ein mögliches Lade-/Trennmodul als Blockschaltbild angegeben. Angeschlossen ist dieses Lade-/Trennmodul an die Generatorklemmen D+ sowie zwischen die Plusklammern beiden Batterien 13 und 15, deren jeweils anderer Pol an die Batterieklemme B- angeschlossen ist.

Die einzelenen Elemente des Lade-/Trennmoduls sind eine Rückstromdiode 20, deren Anode mit dem positiven Pol der Bordnetzbatterie 13 verbunden ist, eine Stromerfassung 21, die einerseits an die Rückstromdiode 20 und andererseits an einen Leistungsschalter 22 angeschlossen ist, der wiederum über eine Ladungsspannungserfassung 23 mit dem positiven Pol der Starterbatterie 15 in Verbindung steht.

Das zentrale Element des Lade-/Trennmoduls 14 stellt eine Verstärkerschaltung 24 dar, der Signale der Stromerfassung 21 sowie der Ladespannungserfassung 23 zugeführt werden und die weiter Signale enthält, aus denen zu erkennen ist, ob der Motor steht oder läuft. Außerdem werden der Verstärkerschaltung 24 die Temperatur des Leistungsschalters 22 sowie die Umgebungstemperatur zugeführt. Gemessen werden diese Temperaturen mit zwei Temperatursensoren 27 und 28. Die Erkennung, ob der Motor läuft oder steht, erfolgt in einer Einrichtung zur Erkennung ob der Motor läuft 25 wobei das Ausgangssignal dieser Einrichtung 25 in einer Einrichtung zur Zeitverzögerung 26 gegebenenfalls verzögert wird, bevor es der Verstärkerschaltung 24 zugeführt wird.

In Figur 8 ist ein weiteres Ausführungsbeispiel für ein Lade-/Trennmodul 14 als Blockschaltbild dargestellt, wobei sich dieses vom in Figur 7 abgebildeten Ausführungsbeispiel dadurch unterscheidet, daß zwischen der Verstärkerschaltung 24 und der Starterbatterie 15 ein Gleichspannungswandler 29 liegt, beispielsweise ein sogenannter Hochsetzsteller, der von der Verstärkerschaltung 24 ansteuerbar ist und in der Lage ist, aus einer niedrigen Spannung eine höhere Spannung zu erzeugen.

Der Leistungsschalter 22 liegt beim Ausführungsbeispiel nach Figur 8 parallel zum Gleichspannungswandler 29 und kann bei entsprechender Ansteuerung von der Verstärkerschaltung 24 zur Überbrückung des Gleichspannungswandlers 29 dienen. Die Ansteuerung des Leistungsschalters erfolgt dabei in Abhängigkeit von den, der Verstärkerschaltung 24 zugeführten Meßgrößen.

Weiterhin weist das Ausführungsbeispiel nach Figur 8 ein zusätzliches Schaltelement 83 auf, welches je nach Ansteuerung durch die Verstärkerschaltung 24 zum Start notwendige Verbraucher 84 (Motormanagement, Einspritzpumpe) an die Batterie 13 oder 15 schaltet. Die Ansteuerung dieses Schaltelementes erfolgt ebenfalls in Abhängigkeit von den, der Verstärkerschaltung 24 zugeführten Meßgrößen.

Diese Meßgrößen entsprechen weitgehend den bei der Beschreibung der Figur 7 angegebenen Meßgrößen, zusätzlich wird noch die Spannung der beiden Batterien gemessen und an Klemme K1.15 wird erfaßt, ob die Zündung ein- oder ausgeschaltet ist.

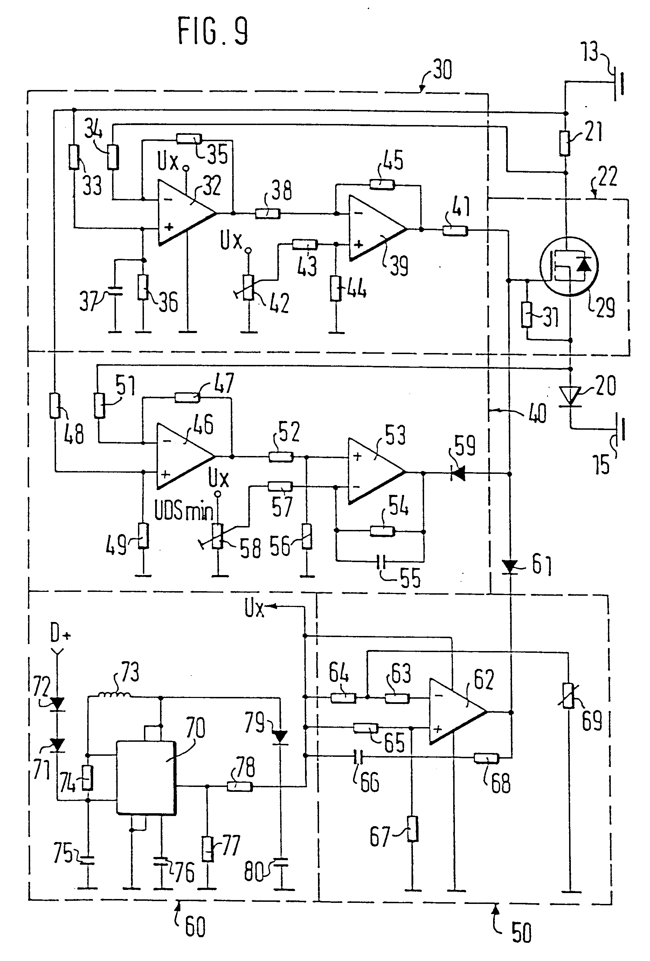

In Figur 9 ist die komplette Schaltungsanordnung eines einfachen Ausführungsbeispiels für ein Lade-/Trennmoduls 14 aufgezeigt. Dabei ist diese Schaltungsanordnung zwischen die Bordnetzbatterie 13 und die Starterbatterie 15 geschaltet und außerdem noch mit der Klemme D+ des Generators verbunden.

Im einzelnen läßt sich die in Figur 9 dargestellte Schaltungsanordnung des Lade-/Trennmoduls unterteilen in die Stromerfassung 21, den Leistungsschalter 22, die Rückstromdiode 20, die Schaltungsanordnung zur Stromregelung 30, die Schaltungsanordnung zur Spannungsregelung 40, den Übertemperaturschutz 50 sowie die Schaltungsanordnung zum Erzeugen der Versorgungsspannung für die Verstärkerschaltungen, die als Gleichspannungswandler 60 ausgebildet ist.

Die Bordnetzbatterie 13 ist über die Stromerfassung 21, die beispielsweise als Widerstand (Shunt) aufgebaut sein kann, den Leistungsschalter 22 und die Rückstromdiode 20 mit der Starterbatterie 15 verbunden. Dabei ist der Leistungsschalter 22 als Feldeffekttransistor 29 ausgebildet, zwischen der Anode der Rückstromdiode 20 und der Drain-Elektrode des Feldeffekttransistors 29 liegt noch ein Widerstand 31.

Die Schaltung zur Stromregelung 30 ist mit der Bordnetzbatterie, mit der Verbindung zwischen Stromerfassung 21 und Leistungsschalter 22 sowie mit der Drain-Elektrode des Feldeffekttransistors 29 des Leistungsschalters 22 verbunden, ebenso mit der Schaltungsanordnung zur Spannungsregelung 40, dem Temperaturschutz 50 und dem Gleichspannungswandler 60.

Die Schaltungsanordnung zur Stromregelung 30 weist einen ersten, als Komparator beschalteten Operationsverstärker 32 auf, dessen nicht invertierender Eingang über einen Widerstand 33 mit der Batterie 13 verbunden ist und dessen invertierender Eingang mit einem Widerstand 34 mit dem Verbundungspunkt zwischen Stromerfassung 21 und Leistungsschalter 22 verbunden ist und außerdem über einen Widerstand 35 mit dem Ausgang des Operationsverstärkers 32 in Verbindung steht.

Zwischen dem nicht invertierenden Eingang des Operationsverstärkers 32 und Masse liegt ein weiterer Widerstand 36 sowie parallel zu diesem ein Kondensator 37. Die Versorgungsspannung des Operationsverstärkers 32 ist mit Ux bezeichnet, sie wird mit Hilfe des später beschriebenen Gleichspannungswandlers 60 erzeugt.

Vom Ausgang des Operationsverstärkers 32 führt eine Verbindung über einen Widerstand 38 zu einem weiteren, als Komparator geschalteten Operatonsverstärker 39, der über einen Widerstand 45 rückgekoppelt ist und über einen weiteren Widerstand 41 mit dem Feldeffekttransistor 29 verbunden ist.

Dem nicht invertierenden Eingang des Operationsverstärkers 39 wird über ein Widerstandsnetzwerk 42, 43, 44 eine aus der Versorgungsspannung Ux ableitbare Referenzspannung zugeführt, der Widerstand 42 ist variabel einstellbar, wobei zu berücksichtigen ist, daß ein Maximalstrom Imax nicht überschritten wird.

Die Schaltungsanordnung zur Spannungsregelung 40 umfaßt einen ersten, als Komparator beschalteten Operationsverstärker 46, dessen invertierender Eingang über einen Widerstand 47 mit dem Ausgang rückgekoppelt ist. Über einen Widerstand 48 ist der Operationsverstärker 46 mit der Schaltungsanordnung zur Stromregelung 30 verbunden und über einen weiteren Widerstand 49 mit Masse.

Vom invertierenden Eingang des Operationsverstärkers 46 führt ein Widerstand 51 zur Verbindung zwischen Feldeffekttransistor 29 des Leistungsschalters und Rückstromdiode 20.

Der Ausgang des Operationsverstärkers 46 ist über einen Widerstand 52 mit einem weiteren, als Komparator geschalteten Operationsverstärker 53 verbunden, rückgekoppelt ist dieser Operationsverstärker 53 über einen Widerstand 54 und einen Kondensator 55.

Weiterhin ist der nicht invertierende Eingang des Operationsverstärkers 53 über einen Widerstand 56 mit Masse verbunden, dem invertierenden Eingang des Operationsverstärkers 53 wird über Widerstände 57, 58 eine einstellbare Spannung UDSmin zugeführt, die im einstellbaren Widerstand 58 aus der Versorgungsspannung Ux abgeleitet wird.

Der Ausgang des Operationsverstärkers 53 führt über eine Diode 59 zur Drain-Elektrode des Feldeffekttransistors 29 und über eine weitere Diode 61 zum Temperaturschutz 50.

Dieser Temperaturschutz 50 besteht aus einem Operationsverstärker 62, dessen Ausgang mit der Diode 61 verbunden ist und dessen Eingänge über Widerstände 63, 64 bzw. 65 mit dem Gleichspannungswandler verbunden sind, wobei parallel zum Widerstand 65 ein Kondensator 66 liegt und der am nicht invertierenden Eingang des Operationsverstärkers 62 liegende Anschluß des Kondensators 66 über einen Widerstand 67 mit Masse verbunden ist und über einen Widerstand 69 mit dem Ausgang des Operationsverstärkers 62.

Ein temperaturabhängiger Widerstand 69 liegt zwischen dem Verbindungspunkt der Widerstand 63 und 64 und Masse, dieser Widerstand ist beispielsweise ein PTC-Widerstand, dessen Widerstandswert sich in Abhängigkeit von der Temperatur des Feldeffekttransistors 29 ändert.

Der Gleichspannungswandler 60 umfaßt einen integrierten Schaltkreis 70, der über zwei Dioden 71, 72 mit der Generatorklemme D+ verbunden ist. Zwischen den Eingängen dieses integrierten Schaltkreises 70 liegt eine Spule 73 und ein Widerstand 74, der über einen Kondensator 75 mit Masse verbunden ist. Weitere Eingänge bzw. Ausgänge des integrierten Schaltkreises 70 sind über einen Kondensator 76 und einen Widerstand 77 mit Masse verbunden, ein weiterer Widerstand 78 sowie eine Diode 79 und ein Kondensator 80 liegen zwischen einem Ausgang des integrierten Schaltkreises 70 und Masse, wobei der Verbindungspunkt zwischen dem Widerstand 78, der Diode 79 und den Kondensator 80 auf den Temperatorschutz 50 führt. An diesem Verbindungspunkt entsteht die Versorgungsspannung Ux zur Versorgung der Operationsverstärker, sie kann beispielsweise auf etwa 26 Volt eingestellt sein.

Durch den Einsatz der in den Figuren 7 bis 9 dargestellten Lade-/Trennmodulen im Zusammenhang mit Vorrichtungen zur Spannungsversorgung in einem Kraftfahrzeug nach den Figuren 3 oder 5 wird sichergestellt, daß die Verbraucher 12, 17, 19 auch während des Startvorgangs an einer konstanten Spannung U1 bzw. U3 liegen. Der Starter wird durch eine eigene Batterie 15 oder einen anderen Startspeicher versorgt, der für die Belange des Starters (Hochstromentladung) ausgelegt wird. Das übrige Bordnetz kann mit Hilfe einer herkömmlichen Batterie 13 versorgt werden, anstelle dieser Batterie kann auch eine andere verwendet werden als bisher, die nicht mehr für die hohen Startströme ausgelegt sein muß sondern lediglich als zyklenfeste Batterie, die auch als Traktionsbatterie bezeichnet wird, ausgelegt sein muß. Beide Spannungsspeicher können damit unabhängig voneinander ausgewählt werden.

Während des Normalbetriebs sind der Starter 11 sowie die zugehörige Batterie bzw. der zugehörige Startspeicher über das Lade-/Trennmodul 14 mit dem übrigen Bordnetz verbunden, die Batterie 15 bzw. der Startspeicher kann dabei vom Generator 10 oder aus der Batterie 13 geladen werden. Während des Startvorgangs unterbricht das Lade-/Trennmodul 14 selbständig die Verbindung zwischen dem Starter bzw. der Starterbatterie und dem übrigen Bordnetz, so daß der vom Starter benötigte hohe Strom nicht zu einem Spannungseinbruch im normalen Bordnetz führen kann.

Da dem Lade-/Trennmodul 14 eine Vielzahl von Informationen über den Fahrzeugzustand zugeführt wird, ist es in der Lage, selbständig, in optimaler Weise die Verbindung zwischen Starter 11 und Starterbatterie 15 sowie dem übrigen Bordnetz zu unterbrechen oder wiederherzustellen, womit 14 eine Art "intelligentes" Lade-/Trennmodul darstellt.

Bei den in den Figuren 3 und 4 dargestellten Vorrichtungen zur Spannungsversorgung ist die Nennspannung der Starterbatterie 15 geringer als die Nennspannung der Bordnetzbatterie 13. Wird vom Lade-/Trennmodul 14 nach abgeschlossenem Startvorgang die Verbindung der Starterbatterie und dem übrigen Bordnetz hergestellt, wird die Starterbatterie 15 daher besonders schnell und zuverlässig geladen, bei stehendem Motor allein aus der Batterie 15 mit der höheren Nennspannung.

Bei Verwendung eines Lade-/Trennmoduls nach Figur 8, bei dem zusätzlich ein Gleichspannungswandler vorgesehen ist, kann als Startspeicher auch eine Batterie mit höhere oder gleicher Nennspannung als die der Bordnetzbatterie verwendet werden, der Spannungswandler 29 erhöht dann die Ladespannung zu geeigneten Zeiten, zur Ladung der Startbatterie 15.

Weiterhin ermöglicht das zustätzliche Schaltelement 83, bei angepaßter Ansteuerung, einen Start auch bei leerer Batterie 13 dadurch, daß zum Start notwendige Verbraucher während des Startvorganges ihre Spannungsversorgung von der Batterie 15 erhalten.

## Patentansprüche

1. Vorrichtung zur Spannungsversorgung in einem Kraftfahrzeug, mit einem ersten Spannungsspeicher (13), der mit einem zweiten Spannungsspeicher (15), aus dem im wesentlichen nur der Starter (11) versorgt wird, über ein Lade-/Trennmodul (14) in Verbindung steht, wobei der erste Spannungsspeicher (13) zur Versorgung des übrigen Kraftfahrzeugs-Bordnetzes dient, mit einem oder zwei Generatoren (10, 16) zur Aufladung der beiden Spannungsspeicher (13, 15), wobei der erste Spannungsspeicher (13) direkt mit dem Generator (10) oder den Generatoren (10, 16) und der zweite Spannungsspeicher (15) über das Lade-/Trennmodul (14) mit dem Generator (10) oder den Generatoren (10, 16) verbindbar ist, wobei das Lade-/Trennmodul (14) in Abhängigkeit von vorgebbaren Parametern die Verbindung zwischen den Spannungsspeichern (13, 15) und zwischen den zweiten Spannungsspeicher (15) und dem Generator (10) oder den Generatoren (10, 16) unterbricht, wobei die Unterbrechung mittels eines Ansteuersignales, das vom Lade-/Trennmodul (14) gebildet wird und ein Schaltmittel in leitendem oder sperrendem Zustand versetzt, erfolgt, dadurch gekennzeichnet, daß die beiden Spannungsspeicher (13, 15) unterschiedliche Nennspannungen aufweisen und das Lade-/Trennmodul (14) den mit dem Starter (11) verbindbaren zweiten Spannungsspeicher (15) während des Startvorgangs vom übrigen Bordnetz abkoppelt, indem die Umschaltmittel (22) in sperrenden Zustand versetzt werden.

2. Vorrichtung nach Anspruch 1, dadurch gekennzeichnet, daß die Nennspannung des zweiten Spannungsspeichers (15) aus dem Starter (11) versorgt wird, geringer ist als die Nennspannung des ersten Spannungsspeichers (13).

3. Vorrichtung nach Anspruch 1 oder 2, dadurch gekennzeichnet, daß mit dem Spannungsspeicher (15) weitere, vorzugsweise Kurzzeitverbraucher verbindbar sind.

4. Vorrichtung nach einem der vorhergenden Ansprüche, dadurch gekennzeichnet, daß ein dritter Spannungsspeicher (18) mit dem zweiten Generator (16) verbunden ist und von diesem aufgeladen wird.

5. Vorrichtung nach einem der vorhergehenden Ansprüche, dadurch gekennzeichnet, daß die Umschaltmittel des Lade-/Trennmoduls (14) einen Leistungsschalter (22) umfassen, der von einer Verstärkerschaltung (24) angesteuert wird, wobei in Abhängigkeit vom Ansteuersignal dieser Verstärkerschaltung (24) der Leistungsschalter (22) in leitendem oder sperrendem Zustand versetzt wird.

6. Vorrichtung nach Anspruch 5, dadurch gekennzeichnet, daß dem Leistungsschalter (22) ein Hochsetzsteller (29) parallel geschaltet ist, der eine höhere Spannung erzeugt, die den zweiten Spannungsspeicher (15) zugeführt wird, wobei die Funktion des Hochsetzstellers von der Verstärkerschaltung (24) mittels eines Ansteuersignales gesteuert wird.

7. Vorrichtung nach einem der vorhergehenden Ansprüche, dadurch gekennzeichnet, daß der Verstärkerschalter (24) wenigstens eines der Signale Stromstärke, Ausgangsspannung, Temperatur des Leistungsschalters (22), Temperatur der Umgebung, Motor läuft/steht, Eingangsspannung, Zündung "ein/aus", zugeführt wird, zur Bildung des Ansteuersignales für die Schaltmittel (22).

8. Vorrichtung nach Anspruch 7, dadurch gekennzeichnet, daß das Signal Motor läuft/steht um eine Zeitspanne (t1) verzögert wird und das verzögerte Signal der Verstärkerschaltung (24) zugeführt wird.

## Claims

1. Device for supplying electric power in a motor vehicle, having a first voltage accumulator (13), which is connected via a charging/disconnecting module (14) to a second voltage accumulator (15) from which essentially only the starter (11) is supplied, the first voltage accumulator (13) serving to supply the remaining motor vehicle electric system, having one or two generators (10, 16) for charging the two voltage accumulators (13, 15), it being possible to connect the first voltage accumulator (13) directly to the generator (10) or the generators (10, 16) and to connect the second voltage accumulator (15) via the charging/disconnecting module (14) to the generator (10) or the generators (10, 16), the charging/disconnecting module (14) interrupting the connection between the voltage accumulators (13, 15) and between the second voltage accumulator (15) and the generator (10) or the generators (10, 16) as a function of prescribable parameters, the interruption being performed by means of a drive signal which is formed by the charging/disconnecting module (14) and which puts a switching means into a conducting or blocking state, characterized in that the two voltage accumulators (13, 15) have different nominal voltages, and during the starting operation the charging/disconnecting module (14) decouples the second voltage accumulator (15), which can be connected to the starter (11), from the remaining vehicle electric system by putting the switchover means (22) into a blocking state.

2. Device according to Claim 1, characterized in that the nominal voltage of the second voltage accumulator (15), from which the starter (11) is supplied, is less than the nominal voltage of the first voltage accumulator (13).

3. Device according to Claim 1 or 2, characterized in that further, preferably short-time consumers can be connected to the voltage accumulator (15).

4. Device according to one of the preceding claims, characterized in that a third voltage accumulator (18) is connected to the second generator (16) and charged thereby.

5. Device according to one of the preceding claims, characterized in that the switchover means of the charging/disconnecting module (14) comprises a circuit-breaker (22) which is driven by an amplifier circuit (24), the circuit-breaker (22) being put into a conducting or blocking state as a function of the drive signal of this amplifier circuit (24).

6. Device according to Claim 5, characterized in that there is connected in parallel with the circuit-breaker (22) a step-up controller (29) which generates a higher voltage which is fed to the second voltage accumulator (15), the functioning of the step-up controller being controlled by the amplifier circuit (24) by means of a drive signal.

7. Device according to one of the preceding claims, characterized in that for the purpose of forming the drive signal for the switching means (22), the amplifier circuit (24) is fed at least one of the signals of current intensity, output voltage, temperature of the circuit-breaker (22), ambient temperature, motor running/stopped, input voltage and ignition "on/off".

8. Device according to Claim 7, characterized in that the signal of motor running/stopped is delayed by a time interval (t1), and the delayed signal is fed to the amplifier circuit (24).

## Revendications

1. Dispositif d'alimentation en tension d'un véhicule automobile, comprenant une première réserve de tension (13) reliée à une seconde réserve de tension (15) celle-ci n'alimentant pratiquement que le démarreur (11) par l'intermédiaire d'un module de charge/coupure (14), la première réserve de tension (13) servant à l'alimentation de la partie restante du réseau embarqué du véhicule automobile, un ou deux générateurs (10, 16) pour charger les deux réserves de tension (13, 15), la première réserve de tension (13) pouvant être reliée directement au générateur (10) ou aux générateurs (10, 16) et la seconde réserve de tension (15) étant reliée par le module de charge/coupure (14) au générateur (10) ou aux générateurs (10, 16), le module de charge/coupure (14) coupant, en fonction de paramètres prédéterminés, la liaison entre les réserves de tension (13, 15) et entre la seconde réserve de tension (15) et le générateur (10) ou les générateurs (10, 16), l'interruption étant faite par un signal de commande formé par le module de charge/coupure (14) et mettant un élément de commutation à l'état conducteur ou à l'état bloqué, caractérisé en ce que les deux diviseurs de tension (13, 15) ont des tensions nominales différentes et le module de charge/coupure (14) relie la seconde réserve de tension (15) susceptible d'être reliée au démarreur (11), pendant la phase de démarrage, avec la partie restante du réseau embarqué, les moyens de coupure (22) étant mis à l'état bloqué.

2. Dispositif selon la revendication 1, caractérisé en ce que la tension nominale de la seconde réserve de tension (15) alimentant le démarreur (11) est inférieure à la tension nominale de la première réserve de tension (13).

3. Dispositif selon la revendication 1 ou 2, caractérisé en ce que d'autres utilisateurs de courte durée peuvent être reliés de préférence à la réserve de tension (15).

4. Dispositif selon l'une des revendications précédentes, caractérisé en ce qu'une troisième réserve de tension (18) est reliée au second générateur (16) pour être chargée par celui-ci.

5. Dispositif selon l'une des revendications précédentes, caractérisé en ce que les moyens de commutation du module de charge/coupure (14) comprennent un interrupteur de puissance (22) commandé par un circuit amplificateur (24) et, en fonction du signal de commande, cet amplificateur (24) de l'interrupteur de tension (22) est mis à l'état conducteur ou à l'état bloqué.

6. Dispositif selon la revendication 5, caractérisé en ce qu'en parallèle à l'interrupteur de puissance (22) il est prévu un dispositif releveur de tension (29) créant une tension plus élevée que celle fournie à la seconde réserve de tension (15), le rôle du dispositif élévateur de tension étant commandé par le circuit amplificateur (24) par l'intermédiaire d'un signal de commande.

7. Dispositif selon l'une des revendications précédentes, caractérisé en ce que le circuit amplificateur (24) reçoit au moins l'un des signaux : intensité, tension de sortie, température de l'interrupteur de puissance (22), température de l'environnement, arrêt/marche moteur, tension d'alimentation, marche/arrêt allumage, de manière à former le signal de commande de l'interrupteur (22).

8. Dispositif selon la revendication 7, caractérisé en ce que le signal marche/arrêt moteur est retardé d'une durée (t1) et le signal retardé est appliqué au circuit amplificateur (24).
